# DEMANDE DE BREVET EUROPEEN

(11) **EP 0 780 779 A1**
(43) Date de publication de la demande: **25.06.1997**
(21) Numéro de dépôt: 96402704.9
(22) Date de dépôt: 12.12.1996
(51) Int. Cl.: G06K 7/06, H04M 1/02

(54) **Dispositif de lecture de carte d'identification**

(30) Priorité: 19.12.1995 FR 9515054
(71) Demandeur: ALCATEL MOBILE PHONES, 75015 Paris (FR)
(72) Inventeur: Savalle, Patrick, 92500 Rueil Malmaison (FR); Petit, Roger, 78500 Sartrouville (FR)
(74) Mandataire: El Manouni, Josiane

(57) **Abrégé**

Dispositif de lecture de carte d'identification (24) d'un appareil radiotéléphone portable comprenant un clavier à touches, un écran, une plaque (30) située sous le clavier et comportant une partie des circuits électroniques de l'appareil ainsi que les contacts (34, 36) actionnés par les touches (32) du clavier pour faire fonctionner l'appareil. La carte d'identification est insérée dans une cavité située sous la plaque de façon à la mettre en contact avec un connecteur (44) de carte d'identification placé sous la touche "navigator" (18) du clavier du côté de la plaque opposé au côté où se trouve la carte d'identification, les connexions entre le connecteur et la carte d'identification se faisant par des contacts (46, 48) portés par le connecteur à travers un évidement (50) de la plaque, de manière à obtenir un gain de place et une diminution de l'épaisseur du boîtier de l'appareil.

## Description

La présente invention concerne les appareils portables du type radiotéléphone dans lesquels l'utilisateur insère une carte d'identification pour permettre le fonctionnement de l'appareil, et en particulier un dispositif de lecture de carte d'identification intégré dans le boîtier d'un appareil portable du type radiotéléphone.

L'utilisation d'un radiotéléphone portable fait appel à une carte d'identification de l'utilisateur appelée couramment carte SIM sur le marché européen, qui doit être reconnue par l'appareil préalablement à sa mise en fonctionnement.

Il existe des lecteurs de carte SIM autonomes pouvant être achetés chez les distributeurs. Mais ces lecteurs autonomes sont encombrants en raison des connecteurs nécessaires pour assurer l'interface entre le lecteur et l 'appareil.

on a donc songé à intégrer le lecteur de la carte SIM dans le boîtier de l'appareil, comme c'est le cas du lecteur de carte décrit dans la demande FR-A-2.687.815. Ce lecteur de carte possède un ensemble de contacts électriques encastrés dans une plate-forme sensiblement plane, et comporte une plaque formant couvercle, écartée de la plate-forme de manière à ce que la plaque couvercle et la plate-forme forment une cavité permettant d'insérer la carte d'identification et de l'appliquer contre les contacts électriques de la plate-forme. Malheureusement les contacts situés sur la plate-forme et servant à la connexion de la carte d'identification prennent une place et occupent une épaisseur non négligeables dans ce type d'appareil où l'occupation optimale de l'espace est une préoccupation majeure.

C'est pourquoi le but de l'invention est de fournir un dispositif de lecture de carte d'identification, dans un appareil portable du type radiotéléphone, comprenant un clavier à touches, une plaque située sous le clavier et comportant des contacts actionnés par les touches du clavier pour faire fonctionner l'appareil, et une fente située sous ladite plaque pour insérer la carte d'identification de façon à la mettre en contact avec un connecteur de carte d'identification. Le connecteur de carte d'identification est placé sous une touche du clavier du côté de ladite plaque opposé au côté où se trouve ladite carte d'identification, les connexions entre ledit connecteur et ladite carte d'identification se faisant au moyen de contacts portés par ledit connecteur à travers un évidement de ladite plaque, ce qui permet d'obtenir un gain de place et une diminution de l'épaisseur du boîtier de l'appareil.

La description qui suit donnée à titre d'illustration de l'invention, a pour but de fournir une meilleure compréhension des caractéristiques de l'invention. Elle fait référence aux dessins dans lesquels :

la figure 1 représente schématiquement un appareil radiotéléphone portable disposant d'une fente à l'avant pour y introduire une carte d'identification, ainsi qu'une touche de type "navigator", et

la figure 2 est une vue en coupe de la partie de l'appareil comportant la touche de type "navigator" et le connecteur de la carte d'identification.

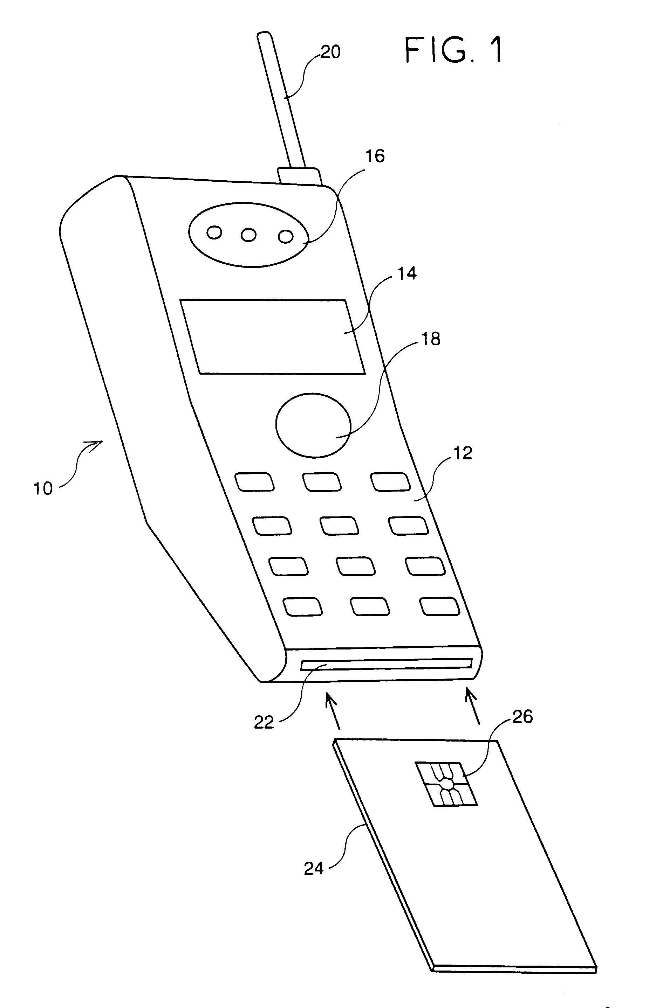

Un appareil radiotéléphone portable illustré sur la figure 1 comprend un boîtier 10 comportant sur sa face avant un clavier à touche 12, un écran 14 et un écouteur 16. Le clavier comporte une touche dite navigator 18 qui permet à l'utilisateur de déplacer un curseur sur l'écran, par exemple pour se déplacer dans un menu. L'utilisateur exerce une pression vers le haut de la touche s'il veut déplacer le curseur vers le haut, vers la bas de la touche s'il veut déplacer le curseur vers le bas, sur la gauche de la touche s'il veut déplacer le curseur vers la gauche et sur la droite de la touche s'il veut déplacer le curseur vers la droite.

L'appareil dispose d'une antenne 20 et d'un micro à son extrémité inférieure qui n'a pas été représenté sur la figure pour éviter de masquer la fente 22 dans laquelle on insère une carte d'identification de l'utilisateur ou carte SIM 24.

La carte d'identification 24 comporte une puce 26 placée dans sa partie supérieure et destinée à venir se placer sous la touche navigator 14 comme on va le voir par la suite. On doit noter que la puce 26 comportant un certain nombre de contacts (8 en principe) est visible de l'utilisateur lorsque la carte est insérée, comme il est devenu habituel pour tous les appareils où il est nécessaire d'introduire une carte d'identification pour le faire fonctionner.

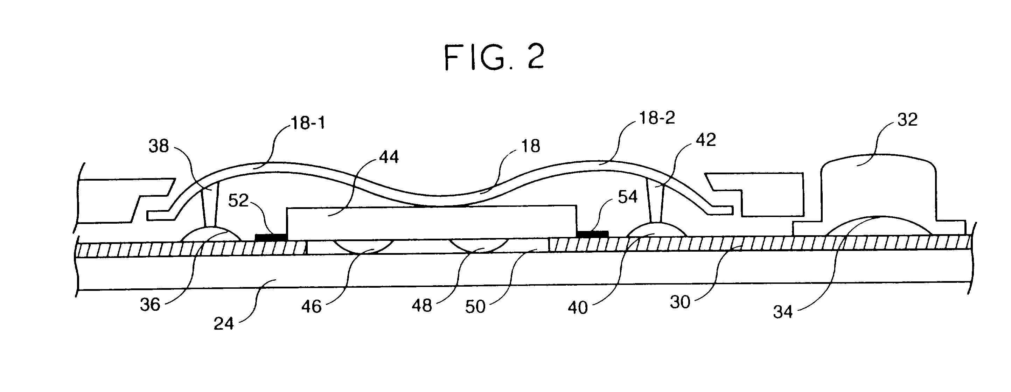

Comme illustré sur la figure 2, la carte d'identification 24 a été insérée dans l'appareil sous la plaque flexible 30 comportant une partie des circuits électroniques de l'appareil, mais également les contacts actionnés par les touches du clavier. Ainsi la touche 32 actionne un contact 34 lorsque l'utilisateur y exerce une pression.

Le clavier comporte également la touche navigator 18 qui permet de se déplacer sur l'écran. On voit sur la figure un contact 36 qui est actionné par l'élément de liaison 38 lorsqu'on exerce une pression sur la partie 18-1 de la touche (déplacement du curseur vers le haut), et un contact 40 qui est actionné par l'élément de liaison 42 lorsqu'on exerce une pression sur la partie 18-2 de la touche (déplacement du curseur vers le bas).

Sous la touche navigator et entre les éléments de liaison 38 et 42, se trouve placé un connecteur 44. Ce dernier comporte des contacts 46 et 48 représentés schématiquement sur la figure 2 qui, à travers l'évidement 50 de la plaque flexible 30, assurent les connexions électriques avec la carte d'identification 24 et en particulier avec les contacts de la puce intégrée dans la carte d'identification.

Les connexions électriques sont assurées entre le connecteur 44 et la plaque flexible 30 au moyen des contacts 52 et 54 situés au dessus de la plaque flexible 30.

On voit donc que la mise en place du connecteur assurant la connexion électrique entre la plaque flexible et la carte d'identification, sous une grande touche du type navigator et du côté opposé à la carte d'identification, permet un gain de place important et une diminution d'épaisseur non négligeable. En outre, le connecteur sert de point d'appui à la touche navigator lorsqu'on y exerce une pression sur sa périphérie pour le déplacement du curseur sur l'écran.

Bien que la description de l'invention ait été faite en référence à un mode de réalisation préféré, il est évident que toute modification de détail peut lui être apportée sans sortir du cadre de l'invention. Ainsi, la touche 18 sous laquelle se trouve le connecteur 44 pourrait être une touche autre que la touche navigator, mais suffisamment large pour que son emplacement central ne comportant pas les contacts avec la plaque flexible puisse contenir le connecteur.

De façon générale, bien que l'invention s'applique particulièrement à un appareil radiotéléphone portable, elle pourrait être utilisée dans tout appareil portable dans lequel une carte d'identification doit être insérée pour que l'appareil puisse fonctionner.

## Revendications

1. Dispositif de lecture de carte d'identification (24) intégré dans le boîtier (10) d'un appareil portable comprenant un clavier à touche (12), une plaque (30) située sous le clavier et comportant des contacts (34, 36) actionnés par les touches (32) du clavier pour faire fonctionner l'appareil, et une fente (22) située sous ladite plaque pour insérer ladite carte d'identification de façon à la mettre en contact avec un connecteur (44) de carte d'identification,
ledit dispositif étant caractérisé en ce que ledit connecteur de carte d'identification est placé sous une touche (18) du clavier du côté de ladite plaque opposé au côté où se trouve ladite carte d'identification, les connexions entre ledit connecteur et ladite carte d'identification se faisant par des contacts (46, 48) portés par ledit connecteur à travers un évidement (50) de ladite plaque.

2. Dispositif selon la revendication 1, dans lequel ladite touche (18) sous laquelle se trouve placé ledit connecteur (44) est une touche large du type "navigator" utilisée pour faire déplacer un curseur dans toutes les directions sur un écran (14) de l'appareil portable.

3. Dispositif selon la revendication 1 ou 2, dans lequel les connexions entre les contacts (46, 48) dudit connecteur (44) et ladite carte d'identification se font au moyen des contacts d'une puce (26) portée par ladite carte d'identification.

4. Dispositif selon la revendication 1, 2 ou 3, utilisé dans un appareil radiotéléphone portable où ladite carte d'identification (24) est une carte SIM.
